# EUROPEAN PATENT SPECIFICATION

(11) **EP 3 126 134 B1**
(45) Date of publication and mention of the grant of the patent: **03.11.2021**
(21) Application number: 15721841.3
(22) Date of filing: 31.03.2015
(51) Int. Cl.: B32B 5/00, B32B 5/24, B32B 7/00, B32B 7/02, B32B 7/04, B32B 7/06, B32B 7/12, B32B 9/00, B32B 15/00, B32B 15/04, B32B 15/08, B32B 15/085, B32B 19/00, B32B 19/04, B32B 23/00, B32B 23/04

(54) **RECYCLABLE MATERIAL**
RECYCLINGFÄHIGES MATERIAL
MATÉRIAU RECYCLABLE

(30) Priority: 03.04.2014 IT RM20140170
(43) Date of publication of application: 08.02.2017
(73) Proprietor: Gimsa S.r.l., 01100 Viterbo (VT) (IT)
(72) Inventor: GIUSTI, Stefano, I-01100 Viterbo (IT); GIUSTI, Martina, I-01100 Viterbo (IT)
(74) Representative: Papa, Elisabetta
(86) International application number: PCT/IB2015/052366
(87) International publication number: WO 2015/151027

(56) References cited:
- EP-A1- 2 452 816
- IT-A1- RM20 080 533
- IT-A1- RM20 080 534
- IT-A1- RM20 110 015
- JP-A- H1 111 564
- JP-A- H06 143 483
- JP-A- 2000 062 118
- JP-A- 2009 173 730
- JP-A- 2012 071 517
- US-A- 3 114 840
- US-A- 5 506 036
- None

## Description

### Technical field of the invention

The present invention relates to a composite material for packaging products of any nature, especially food products. Frequently such composite material is a laminate material constituted by paper and film, paperboard and film, cardboard and film or film-film associated therebetween, even in combination, by means of one or more intermediate layers of adhesive.

### Background

The casings destined to the packaging of products, in particular of food type, must have a combination of specific properties. For example, an adequate mechanical resistance is necessary -above all meant as workability on the packaging machines, resistance to the logistic shocks and resistance to handling during the useful life - associated to a specific capability of insulating the products included in the packaging from the atmospherical agents, such as water vapour, oxygen and so on.

In order to give such properties, so-called composite materials, that is formed by a plurality of assembled base-materials - generally by lamination - are implemented to form a sheet or band for packaging the product, wherein each component material provides one or more of the requested properties.

For example, paper has adequate breathability and mechanical resistance, polyester has mechanical resistance, but both, on themselves, are not weldable and for this reason they need to be associated to other layers of material, generating composites.

Polypropylene and polyethylene, instead, provide a barrier to the water vapour and adequate mechanical resistance and weldability, but practically no barrier to the oxygen.

Still, EVOH (ethylene-vinyl-alcohol) and polyamide provide a barrier to the oxygen and other gases, but they have no property of weldability and, as in case of EVOH, are particularly sensible to the water vapour, with the result, when exposed to such element, of losing its own feature of barrier to oxygen.

Aluminium, for example, provides barrier to oxygen, to the water vapour and to the oxidation from UV, but no mechanical resistance.

Additional features of the component materials to be kept in consideration are then the aesthetical aspect to be given to the final packaging and the cost.

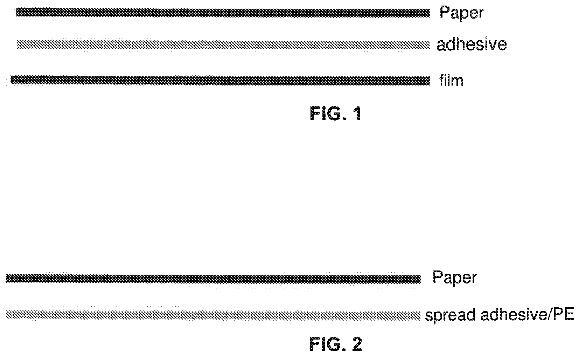

As mentioned above, the composite materials used in the known art are constituted by a plurality of sheet elements laminated together, generally with the interposition of adhesives. Figure 1 shows indeed a scheme of standard coupling with three layers, respectively an outer layer made of paper or paper-like material or, still, fibre context, an intermediate layer of adhesive and an inner layer of film, the latter generally with different properties, complementary to those of paper.

The adhesive is spread on the face of one of the components of the end laminate. Once the adhesive has stabilized its own cohesion action, for example polymerizing, a single body is obtained allowing the subsequent workability of the composite material, typically under the form of continuous tape, on the packaging lines. The component materials are intimately joined and, unless there are manufacturing defects, they cannot be ever separated therebetween.

Figure 2, instead, shows an example of known composite laminate material formed by an outer layer of paper whereon a layer of polyethylene (PE) and/or adhesive is spread. In this application type, during recycling one easily falls in creating so-called *"macro-stikies",* that is agglomerates of paper + adhesive and/or film. The latter potentially are suitable to create cloggings in pipes or other components of paper plants and consequent huge damages by preventing, actually, recyclability of the laminate.

In both the considered examples by referring to Figures 1 and 2, the not separability of the components - plastic film adhered to paper, that is adhesives adhered to fibre - can prevent or hinder recycling of the composite material. US5456968 discloses a paper laminate.

With respect to the properties requested to the mentioned composite materials and to the recyclability thereof, two examples can be made in the field of food packaging which we can consider, for the most common applications, the extreme bracket in terms of complexity.

The packaging of biscuits, dry pasta and similar can be considered a relatively simple application, as the composite laminate material forming the casing only requests mechanical resistance, barrier to the passage of the water vapour and weldability. Therefore, this type of packaging can be advantageously implemented by using a simple film in double polypropylene or a coupled paper-polypropylene. In the first case (double polypropylene), at the end of life, the material can be recycled in the plastic chain, whereas in the second case (paper-polypropylene) the material, commonly being mainly formed by paper, nowadays can be recycled in the paper chain (disposal code C-PAP 81). However, the directive 94/62 EC (*Packaging and Packaging Waste Directive*)*,* which up to now has allowed sending together to the recovery the laminated materials coupled to paper, is going to be modified in a restrictive way, by preventing or restricting, in future, this possibility.

In a more complex application, such as that of packaging pasteurized fresh pasta and similar products, the casings request resistance to the thermal shocks of pasteurization and a barrier effect to oxygen. In this case, couplings constituted by Polyamide-Polypropylene, or, by reducing the film thickness, by Paper-Polyamide-Polypropylene are commonly used. Both these types of material cannot be sent to the recovery through recycling. In fact, the first type is implemented with film of different nature associated therebetween, whereas the second one, even if it has a layer of paper, cannot be given in the chain of the latter as the percentage of film with respect to the overall weight of the packaging is high and so as not to allow the recycling thereof.

What just said with respect to the difficulties in recycling for composite materials with coupled laminated components is valid even in case of composite materials formed by a paper or film substrate whereon one or more spread coverings (coatings) are applied.

### Summary of the invention

The technical problem placed and solved by the present invention is then to provide a composite material allowing to obviate the drawbacks mentioned above by referring to the known art.

In particular, the Inventor detected the need for implementing composite materials for the packaging ― in particular of food products ― which can be easily separated in the single main components, preferably by means of a simple bath in water, to be then sent separately to recycling.

The above-mentioned problem is solved by a composite material according to claim 1.

Preferred features of the present inventions are object of the dependent claims.

The invention provides a composite material for the packaging of products, in particular food products, having features of recyclability of the single main components thereof. In fact, such components result to be separable in bath of water or mainly of water, and the material has then an improved environmental performance and this thanks to the insertion of an intermediate layer of water-soluble material, in particular an alkali metal silicate, the latter preferably sodium Na or potassium K.

In the present context, under "composite" material, a structure formed by several component, or base, materials arranged in adjacent layers is meant.

Typically, the invention material is a material laminated in form of tape or sheet.

As said above, the bath allowing the separation of the composite material into the components thereof is a bath of water or mainly of water. For example, such bath can be formed about by 100% of water or up to about 80% of water and 20% other products. The latter can be soda, acid (for example hydrochloric, sulphuric, boric acid), surfactants or other.

The percentage compositions indicated herein and hereinafter in relation to the composition of bath and of the different materials are meant by weight.

Preferably, the bath is performed at a temperature comprised in a range of about 6 - 80°C.

The specific bath composition and/or temperature indications shown above are to be applied, for example, in case of composite material formed by mixed macerations with presence of printed product and/or containing pollutants of plastic type, polystyrol, polyethylene or other.

The invention allows leaving the surface of the first layer, in particular made of paper, or paper or cellulose material in general, substantially wholly free from the materials used during the coupling phases and making wholly re-usable the fibrous structure of the sheet without producing macro stickies or residual adhesiveness. This is requested, for example, by the rules ATICELCA 501/13.

### Brief description of the figures

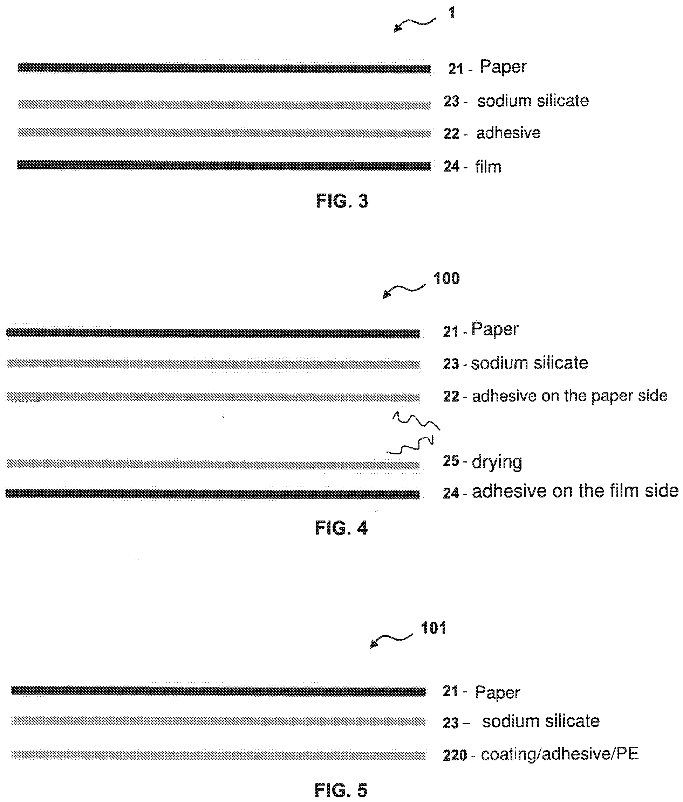

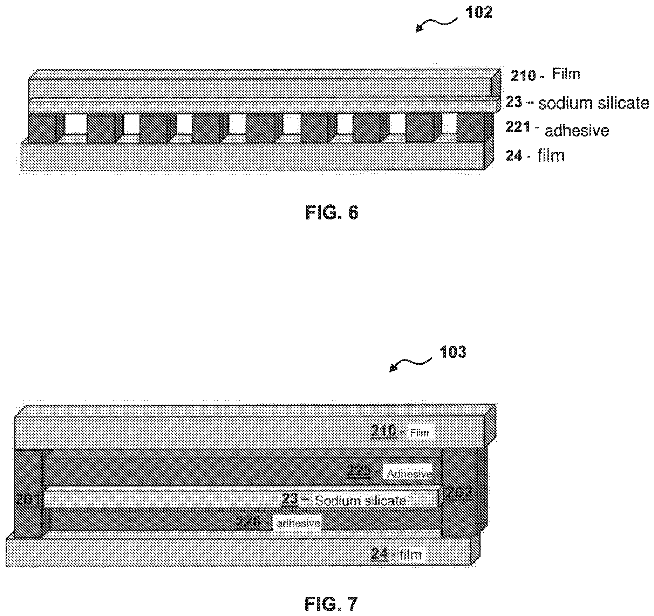

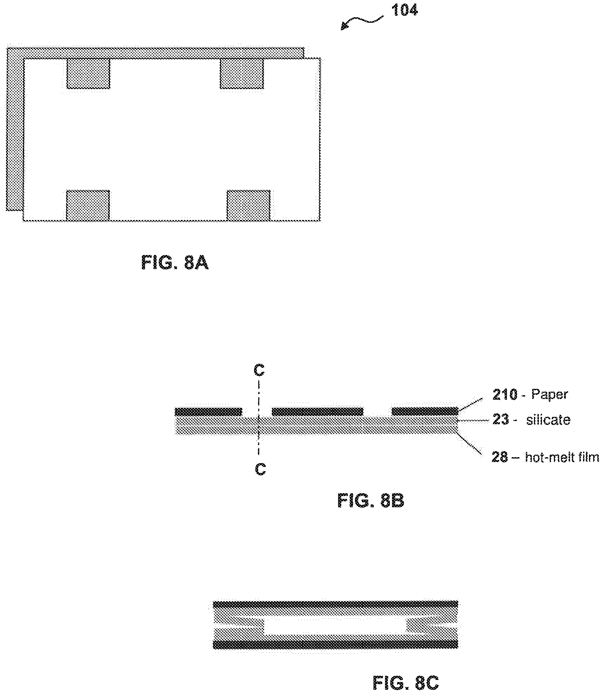

Reference will be made to the figures of the enclosed drawings, wherein:
▪ Figure 1 and Figure 2, already introduced above, relate each one to a respective composite material of known art, showing a schematic exploded view thereof in cross section highlighting the component layers thereof;
▪ Figure 3 shows a schematic view in cross section of a composite material according to a first embodiment of the invention, in an exploded configuration highlighting the component layers thereof;
▪ Figure 4 shows a schematic view in cross section of a composite material of a second embodiment of the invention, in an exploded configuration highlighting the component layers thereof and the assembling modes;
▪ Figure 5 shows a schematic view in cross section of a composite laminated material of a third embodiment of the invention, in an exploded configuration highlighting the component layers thereof;
▪ Figure 6 shows a schematic perspective view of a cross portion of a composite material according to a fourth embodiment of the invention;
▪ Figure 7 shows a schematic perspective view of a cross portion of a composite material according to a fifth embodiment of the invention; and
▪ Figures 8A, 8B and 8B relate to a sixth embodiment of the invention, showing respectively a schematic plan top view of a composite material during assembly, a schematic view in cross section of such material assembled to form a packaging and a schematic view in cross section of such packaging performed according to the line C-C of Figure 8B.

The thicknesses and the sizes represented in the figures mentioned above are to be meant by way of pure example, they are generally magnified and not necessarily shown proportionally.

### Detailed description of preferred embodiments

In the following detailed description, embodiments and variants in addition to embodiments and variants already discussed in the same description will be illustrated by limiting to the difference with respect to what already illustrated.

The different embodiments and variants described hereinafter are subjected to be used in combination, where compatible.

By firstly referring to Figure 3, a laminate composite material according to a first preferred embodiment of the invention is designated as a whole with 1. The composite material 1 is in form of sheet or continuous tape.

In the present example, the composite material 1 is suitable for the packaging of food products, in particular bread, biscuits, fresh or dry pasta or other.

The composite material 1 of the present embodiment is formed by a multilayer structure.

Such structure first of all comprises a first layer 21, which will be called outer layer thanks to its arrangement indeed outside the end packaging and which is made of paper material. In particular, the first layer 21 is made of paper or a cellulose material, with prevalence of cellulose or however fibre.

The multilayer structure then comprises a second layer 22, which will be called inner layer thanks again to its arrangement indeed inside the end packaging. The second layer 22 of the present example is an adhesive.

According to the invention, a third intermediate layer 23 is then provided interposed between the first and the second layer 21 and 22. The intermediate layer 23 is made of an alkali metal silicate M, with M₂O × *n*SiO₂, *n* =1,5÷4. Preferably, the third layer is sodium silicate or potassium silicate.

In the present embodiment, the multilayer structure, at last, comprises a fourth layer 24, still more interior with respect to the second layer 22. In the present example, the third layer 24 is a film with barrier effect to the water vapour, for example a plastic film, in particular of polyethylene, polypropylene, metallised polypropylene, aluminium. Additional subsequent layers of material can be inserted with the purpose of reaching the wished result in terms of mechanical resistance, machinability and barrier of the packaging.

Based upon a method for implementing the composite material 1, the coupling between four or more layers mentioned above is obtained by hot or cold rolling. Based upon a preferred variant, the second layer of adhesive 22 is dried, that is desiccated, before being applied on, that is joined to, the set of the first and third layer 21 and 23.

Preferably, in order to join the set of the layers 21 and 23 to the set of the layers 22 and 24, a rolling calender with controlled temperature and pressure (hot calender) is used. In such variant, the resulting composite material has an optimum seal between the layers.

In an additional variant, the use of *"solventless"* adhesives for the second layer 22 or for the subsequent layers is provided, which, since they are without water, result to be able to implement an improved seal between the layers.

Figure 4 shows a second embodiment of the laminate composite material of the invention, in this case designated with 100. In such embodiment the application of an additional layer of adhesive 25, on the side of the film 24 faced towards the intermediate layer 23, is provided.

Preferably, the method for implementing the composite material 100 provides, as exemplified in Figure 4, a phase of drying, in case simultaneous and performed with the same means, the two adhesive layers 22 and 25 before adhering a set formed by adhesive 25 and film 24 on a set formed by paper 21, silicate 23 and adhesive 22.

Even in this case, the two sets 21-23-22 and 24-25 the implementation method can provide a rolling calender with controlled temperature and pressure (hot calender). This technique provides optimum results of mechanical resistance and seal between the component materials.

Figure 5 relates to a third embodiment of laminate composite material, herein designated with 101. In this case, apart from the outer layer 21 and the intermediate layer 23, an inner layer 220 is provided implemented as covering (coating) or adhesive. Such layer can be constituted by thermo-temperable adhesive, or comprise a polyethylene (PE) melt.

An additional embodiment can provide an outer layer of paper, a spreading of sodium silicate or other water-soluble material in the meaning of the invention and an additional spreading of film as inner layer, for example a *coating* or an adhesive. After spreading, the water-soluble material and the inner layer can result to be interpenetrated and suitable to implement substantially a same composite layer.

Alternatively, the intermediate layer of water-soluble material and the inner layer can be integrated, actually, in a same layer, that is applied together in form of a single material.

In all embodiments illustrated above, the different components of the laminate composite material can be separated therebetween by means of a simple bath of water or of a solution mainly constituted by water. In fact, the sodium silicate (or of another alkali metal), being hydrophilic and soluble in water, when the composite material is placed in a basin containing water, it melts, by implementing the detachment of the film glued thereon ― or of the *coating* applied thereon ― from the paper-like material of the first layer or from the film adhered thereto.

The composite material described above, when associated to a second layer of adhesive, even exploits the flocculant capability of the silicate. In fact, the latter plays a function of "sequestrant" of adhesive particles in the water bath. In this way, one avoids the risk that such adhesive particles, by remaining under suspension in the water wherein the paper fibres are present, come again in contact with the latter, by generating subsequent problems during pulping and formation of the recycled sheet phase, with the creation of pellets and so-called *"stikies"* (agglomerations of paper and adhesive).

In case of composite materials formed by a layer of paper and one of plastic film or coating as those considered so far, it is easy to bring the silicate in contact with the water by means of the capillarity of the cellulose carrier. In particular, there is a big contact surface between water and silicate, with consequent very short time for implementing the phase of detaching the two components film or coating - paper.

In Figure 6 another embodiment of laminate composite material is shown, herein designated with 102, similar to the embodiment of Figure 3, but wherein the silicate layer is interposed between two layers of plastic film. In particular, in the composite material 102 a first outer layer 210 in form of plastic film, an intermediate layer 23 of silicate and a fourth layer 24 in form of film are provided. Furthermore, between the layers 23 and 24 a layer of adhesive 221 is interposed, applied according to a discontinuous pattern. In the represented example, it is an application with longitudinal strips.

Such embodiment is particularly advantageous when it is indeed necessary to implement the separation of plastic films of different nature coupled therebetween in the composite material. In fact, in this case the contact surface of the silicate with the bath water is represented exclusively by the outer side section of the sheet, the layers adhered to the silicate not resulting permeable to water. The above-mentioned discontinuous pattern in the application of the adhesive implements passage channels, inside which the water infiltrates, generating swelling and solubilisation of the silicate and then facilitating the separation of the layers.

In Figure 7 an embodiment variant of the composite material with respect to Figure 6 is shown, in this case designated with 103, providing a "step-like" deposit of silicate. In particular, it is provided that the layer of silicate 23 is interposed between two layers of adhesive, respectively 225 and 226, and that the adhesive involves even side portions of the material, joining directly the two layers of end film 210 and 24 by means of side depositions 201 and 202. In other words, the adhesive implements a frame wrapping the layer of silicate. In this way, there isn't the risk of accidental detachment of the layers during the useful life of the product due to humidity infiltration.

Upon recycling, during separation in water bath, the material 103 can be sectioned in small fragments (for example wide 1 cm x 1 cm), to ease the contact between silicate and water and then the detachment process.

It is to be noted that the silicate, when dry, has high stiffness (and it is defined for this sometimes "liquid glass"). It is possible controlling, and in particular reducing, such stiffness by inserting into the silicate additives helping to make flexible the related layer (for example organic fillers, oils like glycerin, sorbitol, sucrose, variously modified starch, ethylene glycol, styrene polymers, acrylic, poly 2-Ethyl-2-Ossazoline, and so on).

Furthermore, in order to ease setting of the adhesive layer(s) on the silicate layer, mineral fillers can be inserted such as for example calcium carbonate. In particular, by exploiting the natural features of some fillers, such as for example talcum, it is possible providing to the silicate layer features of barrier to the mineral oils. Such feature allows using in the structural stratification layers of recycled paper, without running into the risk of a migration of pollutants dangerous for the human health.

The possibility of inserting more than one layer of silicate can be further considered, and this with the purpose of providing a specific function to each layer. In fact, the silicate of the intermediate layer, or of an additional intermediate layer of the herein considered composite material, can even be additivated - preferably in percentages variable between 0.5% and 99% - with additional components, for example polyvinyl alcohol PVA - PVOH, Ethylene Vinyl alcohol - EVOH, PLA, mica, vermiculite, metal oxides or other, to confer thereto specific properties, for example a barrier effect, in particular to the oxygen, to UV and so on, by avoiding the overlapping of additional layers of plastic film; that is to improve and/or modify, when requested, the solubility features of the used products with the purpose of reaching whole recyclability of the paper-like material.

Furthermore, in case of particular applications wherein a higher resistance to humid environments is necessary, by exploiting the chemical features of the silicate, it is possible proceeding with a partial insolubilisation of the silicate layer, or of one of the most external layers by means of known techniques such as the acid reaction, the insertion of carbonates, the inertisation through CO₂.

In the applications wherein the packaging implemented with the composite material must be kept in the fridge, one can provide to protect the outer surface of the packaging itself with a coating barrier to water, so as to prevent the silicate from being influenced by the humidity of the environment. It is further possible to provide the spreading with a layer of variously combined silicate, of the outer face of the packaging especially if made of paper, in this way by constituting a surface able to implement an easy de-inking during the material recovery.

By referring to Figures 8A-8C, the environmental advantage of the packagings made of the composite material of the invention can be increased even by means of reducing the thicknesses of the single layers composing the composite material. In fact, the higher stiffness of the structure implemented by means of the specific feature of the silicate allows obtaining optimum results with less use of raw materials.

In particular, currently the packagings having the feature of sealing the inner air present on the market are formed by multilayer film wherein the inner layer generally is a hot-melt plastic film. The reason of this choice lies in the need for guaranteeing that the typical weldings performed by the standard packaging machines keep an hermetic sealing even in presence of material overlappings, for example due to the typical indentations of the so-called square-background packagings. In fact, usually the outer layer of the multilayer material used in such packagings is formed by a film which has no features of thermoweldability. The hot-melt film of the inner layer of the multilayer material usually has a thickness so as to cover the differences in thickness in the overlapping points of at least two bellows-like folds of the original material. Therefore, the known packagings characterize for an overall high thickness and, consequently, for the high economic incidence of raw materials and the high environmental impact consequent to the huge quantity of used material.

In the material of Figures 8A-8C, the most external portion formed by the set paper 210 and silicate 23 is sufficiently stiff to guarantee that upon welding no uncontrolled folds generate (the use of silicate, as seen, helps in obtaining this characteristic stiffness, with low thickness of material). Such outer portion is not heat-weldable. The inner layer 28 of hot-melt film obviously is heat-weldable and can have, for example, a thickness comprised between 12 and 60 micron. The outer layer of paper 210 is punched at the cross points of the material upon implementing the packaging weldings, making that the weldings have a substantially flat contact surface, thus allowing to implement airtight packagings even by using film with low thickness, thanks to the stiffness given through the layer of silicate and, in case, heat-welding and not necessarily thermal fuses.

In an additional variant, it is possible implementing a composite material comprising, in sequence, the following layers:
- an outer layer of Polyethylene or water-resistant paint;
- an ink layer;
- a silicate layer;
- a paper layer;
- a silicate layer;
- a layer of aluminium + silicate;
- a layer of so-called *"solventless"* material; and
- an inner layer of Polyethylene or a hot-melt plastic film in coupled film.

Furthermore, among the coupling possibilities all categories of films and *coatings* coming from renewable sources can be used, such as for example PLA ― Cellophane, PHB, PCL, that is, if it is the case, the precursors thereof in case in variable mixtures, such as sugars, vegetable oils, starchs and so on.

At last, as replacement of the silicate of alkali metal mentioned above, it is possible using another water-soluble material, alone or in combination with the silicate and/or with one of the other additives mentioned above. In particular, the above-mentioned intermediate layer can be made in one or more materials selected from a group comprising: gelatin, arabic gum, polyvinylpyrrolidone, carboxymethylcellulose, hydroxyethylcellulose, methylcellulose, polyvinyl alcohol.

The water-soluble material can be, as seen, portion of a layer including it in prevalent percentage, for example with a composition of 99% of polyvinyl alcohol and already mentioned additives/adjuvants, in particular sugar and/or starchs, or 2% of sodium silicate or other, and viceversa.

## Claims

1. A laminate composite material (1), suitable for the packaging of food products, having a multilayer structure which includes:
▪ a first outer layer (21);
▪ a second inner layer (22);
▪ a third intermediate layer (23) interposed between said first outer layer (21) and said second inner layer (22),
wherein said first layer (21) is of paper or a paper-like, cellulosic or fibrous material,
wherein said second layer (22) is a layer of adhesive or a layer of hot-melt and/or heat-weldable and/or metallic film, and
wherein said third layer (23) comprise exclusively or in a predominant percentage a water-soluble material, so that two or more of said layers (21, 22, 23) are configured to be separated by means of a bath of water or with prevalence of water, the water-soluble material comprising an alkali metal silicate M with M₂O × *n*SiO₂ and *n* = 1,5 ÷ 4, wherein M is selected from a group comprising sodium Na, potassium K and Lithium Li.

2. The composite material (1) according to the preceding claim, wherein said water-soluble material is polyvinyl alcohol representing about 99% of the composition of its own layer or sodium silicate representing about 2% of the composition of its own layer.

3. The composite material (1) according to claim 1, wherein said water-soluble material comprises one or more materials selected from a group comprising: sugars, starches, gelatin, arabic gum, polyvinylpyrrolidone, carboxymethylcellulose, hydroxyethylcellulose, methylcellulose, polyvinyl alcohol.

4. The composite material (1) according to any one of the preceding claims, comprising a further layer (24, 25) adjacent to said second inner layer (22) and preferably selected from a group comprising an adhesive, a film material and a coating.

5. The composite material (1) according to the preceding claim, wherein said second layer (220) and/or said further layer (24) is made of polyethylene PE.

6. The composite material (1) according to any one of the preceding claims, wherein said intermediate layer (23), said first layer (21) or said second layer (22) comprises one or more additives selected in the following group: organic fillers, oils (such as glycerin, sorbitol, ethylene glycol), styrenic polymers, acrylics, mineral fillers (e.g. talc powder), polyvinyl alcohol PVA - PVOH, PLA Ethylene -Vinyl alcohol (EVOH), mica, vermiculite, feldspars, zeolites, sugar, starch or other.

7. The composite material (1) according to any one of the preceding claims, wherein said second inner layer (22) is applied according to a discontinuous pattern, in such a way as to form channels for the water passage of the water bath.

8. The composite material (1) according to any one of the preceding claims, comprising a film and/or a *coating* coming from renewable sources, for example PLA-Cellophane, PHB, PCL.

9. The composite material (1) according to any one of the preceding claims, which is in the form of a sheet or continuous tape.

10. A packaging comprising a casing made of a composite material (1) according to any one of the preceding claims and a product, in particular food, received within said casing.

## Patentansprüche

1. Laminat-Verbundmaterial (1), das für das Verpacken von Lebensmitteln geeignet ist, mit einer Mehrschichtstruktur, die folgendes beinhaltet:
- eine erste äußere Schicht (21);
- eine zweite innere Schicht (22);
- eine dritte dazwischenliegende Schicht (23), die zwischen der ersten äußeren Schicht (21) und der zweiten inneren Schicht (22) eingefügt ist,
wobei die erste Schicht (21) aus Papier oder einem papierartigen, zellulosehaltigen oder faserigen Material besteht,
wobei die zweite Schicht (22) eine Schicht aus Klebstoff oder ein heißschmelzender und/oder schweißbarer und/oder metallischer Film ist, und
wobei die dritte Schicht (23) ausschließlich oder zu einem überwiegenden Prozentsatz ein wasserlösliches Material umfasst, so dass zwei oder mehr der Schichten (21, 22, 23) so ausgestaltet sind, dass sie mittels eines Bades aus Wasser oder unter Vorherrschen von Wasser getrennt werden können, wobei das wasserlösliche Material ein Alkalimetallsilikat M mit M₂O × *nSiO₂* und n=1,5 ÷ 4 umfasst, wobei M ausgewählt ist aus einer Gruppe umfassend Natrium Na, Kalium K und Lithium Li.

2. Verbundmaterial (1) gemäß dem vorhergehenden Anspruch, wobei das wasserlösliche Material Polyvinylalkohol ist, der etwa 99 % der Zusammensetzung seiner eigenen Schicht ausmacht, oder Natriumsilikat, das etwa 2 % der Zusammensetzung seiner eigenen Schicht ausmacht.

3. Verbundmaterial (1) gemäß Anspruch 1, wobei das wasserlösliche Material ein oder mehrere Materialien umfasst, die aus einer Gruppe ausgewählt sind, welche umfasst: Zucker, Stärken, Gelatine, Gummiarabikum, Polyvenylpyrrolidon, Carboxymethylcellulose, Hydroxyethylcellulose, Methylcellulose, Polyvinylalkohol.

4. Verbundmaterial (1) gemäß einem der vorhergehenden Ansprüche, umfassend eine vierte Schicht (24, 25) angrenzend an die zweite innere Schicht (22) und vorzugsweise ausgewählt aus einer Gruppe umfassend einen Klebstoff, ein Folienmaterial und eine Beschichtung.

5. Verbundmaterial (1) gemäß dem vorhergehenden Anspruch, wobei die zweite Schicht (220) und/oder die vierte Schicht (24) aus Polyethylen PE hergestellt ist.

6. Verbundmaterial (1) gemäß einem der vorhergehenden Ansprüche, wobei die zwischenliegende Schicht (23), die erste Schicht (21) oder die zweite Schicht (22) ein oder mehrere Zusätze ausgewählt in der folgenden Gruppe umfasst: organische Füller, Öle (wie zum Beispiel Glyzerin, Sorbitol, Ethylenglykol), Styrolpolymere, Acryle, mineralische Füller (zum Beispiel Talkumpulver), Polyvinylalkohol PVA-PVOH, PLA Ethylen-Vinyl-Alkohol (EVOH), Glimmer, Vermikulit, Feldspate, Zeolithe, Zucker, Stärke oder andere.

7. Verbundmaterial (1) gemäß einem der vorhergehenden Ansprüche, wobei die zweite innere Schicht (22) gemäß einem diskontinuierlichen Muster aufgebracht ist, in einer Weise, dass sie Kanäle für den Wasserdurchgang des Wasserbades ausbildet.

8. Verbundmaterial (1) gemäß einem der vorhergehenden Ansprüche, umfassend einen Film und/oder eine Beschichtung aus erneuerbaren Quellen, Beispielweise PLA-Cellophan, PHB, PCL.

9. Verbundmaterial (1) gemäß einem der vorhergehenden Ansprüche, das in Form eines Bogens oder eines Endlosbands vorliegt.

10. Gebinde umfassend eine Hülle, die aus einem Verbundmaterial (1) gemäß einem der vorhergehenden Ansprüche hergestellt ist, und ein Produkt, insbesondere Lebensmittel, welches in der Verpackung aufgenommen ist.

## Revendications

1. Matériau composite stratifié (1), approprié pour l'emballage de produits alimentaires, ayant une structure multicouches qui comprend :
- une première couche externe (21) ;
- une deuxième couche interne (22) ;
- une troisième couche intermédiaire (23) intercalée entre ladite première couche externe (21) et ladite deuxième couche interne (22),
dans lequel ladite première couche (21) est en papier ou en un matériau fibreux, cellulosique ou de type papier,
dans lequel ladite deuxième couche (22) est une couche d'adhésif ou une couche de film thermofondu et/ou thermosoudable et/ou métallique, et
dans lequel ladite troisième couche (23) comprend exclusivement ou dans un pourcentage prédominant un matériau hydrosoluble, de sorte que deux desdites couches (21, 22, 23) ou plus sont conçues pour être séparées au moyen d'un bain aqueux ou à prédominance aqueuse, le matériau hydrosoluble comprenant un silicate de métal alcalin M avec M₂O × *n*SiO₂ et *n* = 1,5 ÷ 4, où M est choisi dans un groupe comprenant du sodium Na, potassium K et du lithium Li.

2. Matériau composite (1) selon la revendication précédente, dans lequel ledit matériau hydrosoluble est l'alcool polyvinylique représentant environ 99 % de la composition de sa propre couche ou le silicate de sodium représentant environ 2 % de la composition de sa propre couche.

3. Matériau composite (1) selon la revendication 1, dans lequel ledit matériau hydrosoluble comprend un ou plusieurs matériaux choisis dans un groupe comprenant : sucres, amidons, gélatine, gomme arabique, polyvinylpyrrolidone, carboxyméthylcellulose, hydroxyéthyl-cellulose, méthylcellulose, alcool polyvinylique.

4. Matériau composite (1) selon l'une quelconque des revendications précédentes, comprenant une couche supplémentaire (24, 25) adjacente à ladite deuxième couche interne (22) et de préférence choisie dans un groupe comprenant un adhésif, un matériau de film et un revêtement.

5. Matériau composite (1) selon la revendication précédente, dans lequel ladite deuxième couche (220) et/ou ladite couche supplémentaire (24) est fabriquée en polyéthylène PE.

6. Matériau composite (1) selon l'une quelconque des revendications précédentes, dans lequel ladite couche intermédiaire (23), ladite première couche (21) ou ladite deuxième couche (22) comprend un ou plusieurs additifs choisis dans le groupe suivant : charges organiques, huiles (comme la glycérine, le sorbitol, l'éthylène glycol), polymères styréniques, acryliques, charges minérales (par exemple poudre de talc), alcool polyvinylique PVA - PVOH, PLA éthylène - alcool vinylique (EVOH), mica, vermiculite, feldspaths, zéolites, sucre, amidon et autre.

7. Matériau composite (1) selon l'une quelconque des revendications précédentes, dans lequel ladite deuxième couche interne (22) est appliquée selon un motif discontinu, de telle manière à former des canaux pour le passage de l'eau du bain aqueux.

8. Matériau composite (1) selon l'une quelconque des revendications précédentes, comprenant un film et/ou un revêtement provenant de sources renouvelables, par exemple PLA-cellophane, PHB, PCL.

9. Matériau composite (1) selon l'une quelconque des revendications précédentes, qui est sous la forme d'une feuille ou d'un ruban continu.

10. Emballage comprenant un casier fabriqué en un matériau composite (1) selon l'une quelconque des revendications précédentes et un produit, en particulier de la nourriture, réceptionné à l'intérieur dudit casier.
